# EUROPEAN PATENT APPLICATION

(11) **EP 2 015 481 A1**
(43) Date of publication of application: **14.01.2009**
(21) Application number: 07301134.8
(22) Date of filing: 20.06.2007
(51) Int. Cl.: H04B 17/00, H04B 7/005

(54) **Method for estimating the noise floor power level in a cell of a cellular radio communication network and base station**

(71) Applicant: Alcatel Lucent, 75008 Paris (FR)
(72) Inventor: Schmidt, Michael, 70374 Stuttgart (DE)
(74) Representative: Schneider, Sandra

(57) **Abstract**

The present invention relates to a method for estimating the noise floor power level (40) and a cellular radio communication network.The method comprises the steps of sending signals from a base station (10) to the user equipments (20) in the cell (30), causing the user equipments (20) in the cell (30) to adapt their sending powering in a way leading to an oscillating sending power of the user equipment. The value of received total wide band power (55) at the base station is then measured, filtered and the noise floor power level in the cell is estimated using that filtered value of received total wide band power. The invention further relates to a base station for performing the method.

## Description

### BACKGROUND OF THE INVENTION

The invention relates to a method for estimating the noise floor power level in a cell of a cellular radio communication network. The invention also relates to a base station for performing that method.

Power control mechanisms in UMTS (Universal Mobile Telecommunications System) comprise inner loop power control mechanisms. The inner loop power control mechanisms of UMTS comprise fast closed loop power control. In fast closed loop power control the user equipments adjust their output power in accordance with one or more transmit power control (TPC) commands received in the downlink from the base station, in order to keep the received uplink signal-to-interference ratio (SIR) at a given SIR target. The user equipments in a cell being serviced by the servicing base station are able to adapt their transmit power according to control commands received from the serving base station.

High speed uplink packet access (HSUPA) is an enhanced uplink feature of the UMTS terrestrial radio access network (UTRAN). The enhanced uplink in UTRAN improves uplink cell capacity mainly due to the introduction of H-ARQ and fast node B based scheduling. In the context of HSUPA the transport format combinations (E-TFCS) of the transport channel subject to the node B scheduling (E-DCH) are controlled by the node B which can grant the user equipment with the maximum amount of the uplink resources the given user equipment is allowed to use. An E-TFC (E-DCH transport format combination) is the combination of currently valid transport formats for the E-DCH with the applicable maximum number of H-ARQ retransmissions and applied transmission power offset. In particular, node B based scheduling maximizes the cell capacity as it allows tighter control of the interference power levels using fast adaptation of the uplink E-DCH traffic load.

In the United States Patterned Application Publication US°2006/O178112°A1 a communication flow for HSUPA is shown that allows a node B to measure the thermal plus background noise level. At the same time it also allows the radio network controller (RNC), according to its own centralized strategy, to overwrite the very same value of thermal plus background noise level that is used in the node B decentralized scheduling.

Scheduling is performed in the node B for example by a MAC-E scheduler. The node B takes care of scheduling such that the total noise rise level cost by the scheduled channels stays below or on a target noise level. This is also called interference control. The threshold for the interference control inside the scheduler in the node B, e. g. the MAC-E scheduler, is given by a target maximum ratio of the received total wide band power (RTWP) to the received noise floor RTWP_{ref} commonly referred to as rice over thermal (ROT). RTWP_{ref} describes the received noise of an empty cell and contains e. g. the thermal and receiver amplifier noise as well as background noise sources.

Due to changing environmental conditions and dynamic background noise sources, the received noise floor may change over time. If the scheduler in the node B assumes a static received noise floor, it either underestimates or overestimates the actual rise over thermo ratio in its served cell. This will result in either a throughput performance loss or instable cell interference conditions.

An embodiment of the invention is described with respect to UMTS. The invention can be applied to any wireless telecommunication system with inner loop power control mechanisms.

### OBJECT OF THE INVENTION

An object of the invention is to provide a tracking mechanism of the received noise floor. The further object of the invention is to provide a base station applying that tracking mechanism.

### SUMMARY OF THE INVENTION

These objects and other objects are solved by the features of the independent claims. Features of preferred embodiments of the invention are found in the dependent claims.

Providing a tracking mechanism to the scheduler in the node B enables the scheduler to control the interference conditions per served cell in terms of constant rise over thermal ratios.

The invention provides a real time tracking method of the received noise floor based on the inner loop power control in the base station, e. g. the node B. The inventive method bases its real time tracking on dithering the inner loop power control in the served cell of a base station, e. g. node B. This allows to directly measure the current rise over thermal ratio per cell. This is for example required for efficient HSUPA MAC-E scheduling in the presence of high temporal variations of the received noise power level. The method can be implemented with low computational complexity.

The method for estimating the noise floor power level in a cell in a cellular radio communication network comprises the steps of sending signals from the base station serving the cell to the user equipments in the cell causing the user equipments in the cell to adapt their sending power in a way leading to an oscillating sending power of the user equipments. The signals send from the base stations serving the cell to the user equipments in the cell are for example based on the inner loop power control signals of UMTS. The base station e. g. node B sends the signals, e. g. the power control signals of UMTS in a way to make the user equipments adapt their sending power in an oscillating way. The value of received total wide band power RTWP is then measured at the base station serving the cell. The value of received total wide band power is then filtered at the base station and the noise floor power level in the cell is estimated using that value of received total wide band power.

The inventive method uses a power control mechanism provided by the cellular radio communication network to make the sending power of the user equipments in the cell oscillate. The power adaptation used for this may for example be the inner loop power control of UMTS. The oscillating sending power of the user equipments leads to a value of received total wide band power at the base station which allows to estimate the noise floor power level in the cell using a filtered value of received total wide band power.

According to a preferred embodiment of the invention the sending power of the user equipments is made to oscillate at a dithering frequency. The base station sends signals to the user equipments which leads to an oscillating sending power of the user equipments around a dithering frequency. This leads to a received total wide band power at the base station that has an oscillating amplitude with substantially said dithering frequency. According to this embodiment of the invention all the user equipments in a cell are made to oscillate their sending power at the same dithering frequency. This leads to an oscillating amplitude of received total wide band power which oscillates at substantially set dithering frequency.

According to a further preferred embodiment of the invention the value of received total wide band power at the base station is filtered using a band pass filter centred around that dithering frequency. The noise floor power level in the cell is then estimated using that band pass filtered value of received total wide band power. The band pass filter used at the base station for filtering has a centred frequency of that dithering frequency.

According to a further preferred embodiment of the invention the value of received total wide band power at the base station is filtered using a low pass filter. The noise floor power level in the cell being served by the base station is estimated using that band pass filtered value of received total wide band power and that low passed filtered value of received total wide band power. This embodiment of the inventive method also provides a real time tracking of the received noise floor in a cell with low computational complexity, as the band pass filter and the low pass filter can be implemented easily at the base station.

A base station adapted to perform the method for estimating the noise floor power level in a cell in a cellular radio communication network comprises means to send signals to the user equipments in the cell being served by the base station, the signals sent by the base station causing the user equipments in the cell to adapt their sending power in a way leading to an oscillating sending power of the user equipments. The base station further comprises measuring means to measure a value of received total wide band power. The base station further comprises at least one filter to filter that value of received total wide band power. The base station further comprise estimation means to estimate the noise floor power level in the cell using that filtered value of received total wide band power.

The signals sent to the user equipments adapt the sending power of the user equipment in a way that the user equipments oscillate their sending power with the same frequency. That frequency is called the dithering frequency. As a result the received total wide band power at the base station has an oscillating amplitude with substantially said dithering frequency.

According to a preferred embodiment of the invention said at least one filter at the base station is a band pass filter centred around said dithering frequency for filtering said value of received total wide band power having an oscillating amplitude with substantially said dithering frequency. The noise floor power level in a cell is then estimated using said band pass filtered value of received total wide band power.

According to a further preferred embodiment of the invention the at least one filter at the base station is a band pass filter and a low pass filter for filtering that value of received total wide band power. The noise floor power level in the cell is then estimated using estimation means in the base station. The estimation means uses said band pass filtered value of received total wide band power and said low pass filtered value of received total wide band power to estimate the noise floor power in the cell.

### BRIEF DESCRIPTION OF THE DRAWINGS

Other characteristics and advantages of the invention will become apparent in the following detailed description of preferred embodiments of the invention illustrated by the accompanying drawings given by way of non limiting illustration.
Figure 1 shows a base station, a cell and user equipments in the cell,
Figure 2 shows the rise over thermal without and with the inventive method,
Figure 3 shows oscillating powers in a cell,
Figure 4 shows an example of a rise over thermal estimator.

### DETAILED DESCRIPTION OF THE INVENTION

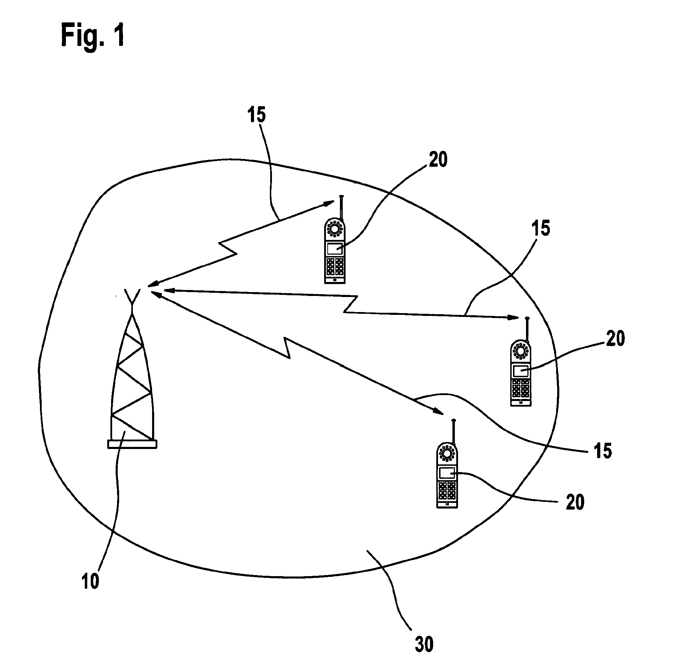

Figure 1 shows a cell 30 served by a base station 10 and user equipments 20 in the cell. The user equipments communicate with the base station over radio links 15. A scheduler inside the base station 10 is for example a MAC-E scheduler. Such a scheduler in the base station 10 performs interference control in the cell. The threshold used inside the scheduler in the base station 10 is for example given by a target maximum ratio of the received total wide band power RTWP to the received noise floor RTWP_{ref}. The target maximum radio of the received total wide band power to the received noise floor is also called rise over thermal ROT. The received noise floor RTWP_{ref} describes the received noise of an empty cell and contains e. g. the thermal and receiver amplifier noise as well as background noise sources.

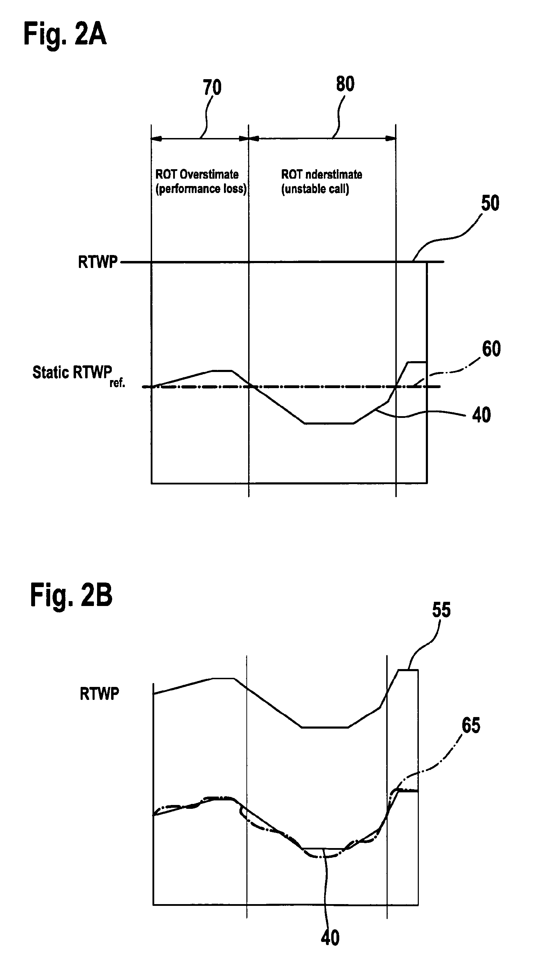

Figure 2A shows the rise over thermal of a scheduler without real time tracking of a time-varying received noise floor. Due to changing environmental conditions and dynamic background noise sources the received noise floor changes over time. If the scheduler in the base station 10 assumes a static received noise floor, it either under- or overestimates the actual rise over thermal ratio in the cell, which will result in throughput performance loss or instable cell interference condition. In Figure 2A a static received noise floor is assumed by the scheduler. In region 70 the scheduler overestimates the rise over thermal which leads to a performance loss in the cell. In the region 80 of Figure 2A the scheduler underestimates the rise over thermal which may lead to an unstable cell. In Figure 2A the received total wide band power RTWP denoted as 50 in Figure 2A is kept constant according to the assumed static received noise floor 60.

In Figure 2B the temporal varying noise floor 40 is tracked by the inventive method. The tracked received noise floor RTWP_{ref} is denoted with 65 in Figure 2B. As the rise over thermal is kept constant the RTWP is also adapted to the varying noise floor 40. As a consequence the RTWP 55 in Figure 2B also changes over time.

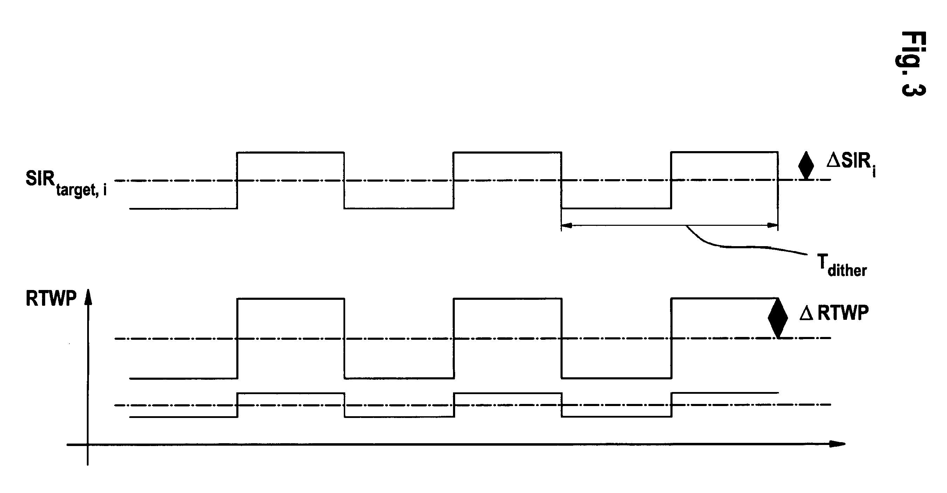

The invention uses a dithering mechanism of the inner loop power control to estimate the current rise over thermal ratio. The inner loop power control of the i^{th} user in a cell is dithered around a target signal to interference ratio with index i SIR_{target,i} with a cell specific dithering period T_{dither} and a user specific dithering amplitude ΔSIRᵢ. Figure 3 shows in the upper half such a dithering signal to interference ratio for user i ΔSIRᵢ. The dithering mechanism is in phase for all users i in a cell. As a result the RTWP of the cell will oscillate at the dithering frequency as shown in the lower half of Figure 3.

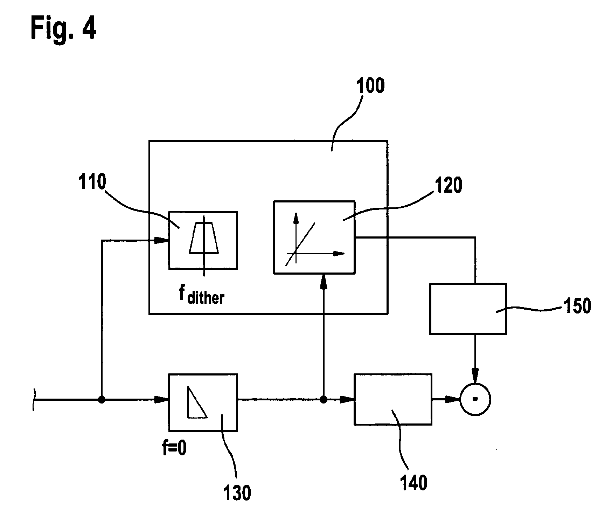

If the relative oscillation amplitude RTWP at the dithering frequency is proportional to the rise over thermal than the received noise floor RTWP_{ref} can be tracked as the weighted difference of a low pass and band pass filtered signal of a simple RTWP measurement as shown in Figure 4.

This can be achieved by choosing appropriate relative dithering amplitudes Δ SIR/SIR_{target} for the users taking into account their respective gain factors.

Figure 4 shows an example configuration of a rise over thermal estimator at a base station 10. The rise over thermal estimator comprises a low pass filter 130. The rise over thermal estimator also comprises a filtering means 100 which comprises a band pass filter centred around the dithering frequency F_{dither} 110 and a module 120 which maps the filtered signal to rise over thermal -1. Modules 140 and 150 map their input to decibel. The outputs of modules 140 and 150 are combined in a subtractor to give the rise over thermal estimation as a result.

## Claims

1. Method for estimating the noise floor power level (40) in a cell (30) of a cellular radio communication network, the method comprising the steps of:
sending signals from a base station (10) to the user equipments (20) in the cell (30), causing the user equipments (20) in the cell (30) to adapt their sending power in a way leading to an oscillating sending power of the user equipments, the method further comprising the steps of:
measuring a value of received total wideband power (55) at the base station (10), filtering said value of received total wideband power (55), estimating the noise floor power level in the cell using said filtered value of received total wideband power.

2. Method according to claim 1, whereas
the frequency of oscillation of the oscillating sending power of the user equipments (20) is the dithering frequency, and the
the received total wideband power at the base station has an oscillating amplitude with substantially said dithering frequency.

3. Method according to claim 2, further **characterized by** the steps of
said value of received total wideband power being filtered using a band pass filter (110) centered around said dithering frequency, and
the noise floor power level in the cell (30) being estimated using said band pass filtered value of received total wideband power.

4. Method according to claim 3, **characterized by**
said value of received total wideband power (55) being filtered using a low pass filter (130), and
the noise floor power level in the cell being estimated using said band pass filtered value of received total wideband power and said low pass filtered value of received total wideband power.

5. Base station (10) of a cellular radio communication network, adapted to estimate the noise floor power level in a cell (30), comprising
means to send signals to the user equipments (20) in the cell (30), causing the user equipments (20) in the cell (30) to adapt their sending power in a way leading to an oscillating sending power of the user equipments (20), further comprising
measuring means to measure a value of received total wideband power (55), filtering means to filter said value of received total wideband power (55), and estimation means to estimate the noise floor power level in the cell (30) using said filtered value of received total wideband power.

6. Base station (10) according to claim 5, whereas
the frequency of oscillation of the oscillating sending power of the user equipments (20) is the dithering frequency, and the
the received total wideband power at the base station (10) has an oscillating amplitude with substantially said dithering frequency.

7. Base station (10) according to claim 6, **characterized by**
a band pass filter (110) centered around said dithering frequency for filtering said value of received total wideband power (55),
and estimation means to estimate the noise floor power level in the cell using said band pass filtered value of received total wideband power.

8. Base station (10) according to claim 7, further **characterized by**
a low pass filter (130) for filtering said value of received total wideband power (55),
and estimation means to estimate the noise floor power level in the cell using said band pass filtered value of received total wideband power and said low pass filtered value of received total wideband power.
